# EUROPEAN PATENT SPECIFICATION

(11) **EP 3 903 965 B1**
(45) Date of publication and mention of the grant of the patent: **29.11.2023**
(21) Application number: 20172545.4
(22) Date of filing: 30.04.2020
(51) Int. Cl.: B01D 39/20, B22F 1/052, B22F 1/062, B22F 1/10, B22F 1/105, B22F 3/105, B22F 5/10, C22C 1/04, C22C 32/00, C22C 33/02

(54) **METHOD OF MANUFACTURING BONDED FILTER MATERIALS**
VERFAHREN ZUR HERSTELLUNG VON GEBUNDENEN FILTERMATERIALIEN
PROCÉDÉ DE FABRICATION DE MATÉRIAUX FILTRANTS COLLÉS

(43) Date of publication of application: 03.11.2021
(73) Proprietor: EPoS Technologies SA, 1690 Villaz-St-Pierre (CH)
(72) Inventor: FAIS, Alessandro, 1690 Villaz-St-Pierre (CH)
(74) Representative: De Bonis, Paolo

(56) References cited:
- EP-A2- 2 203 236
- GB-A- 1 051 275
- JP-A- 2003 268 410
- US-A- 6 152 978
- US-A1- 2017 028 473

## Description

### Field of the invention

The present invention relates to methods of manufacturing filtering elements, particularly filtering elements exhibiting biocidal properties. Background documents in this field include, i.a., GB 1 051 275 A, US 2017/028473 A1, JP 2003 268410 A, and EP 2 203 236 A2.

### Background art

Copper and copper-based materials are known i.a. for being algaecides, bactericides and virucides. Copper-containing metals and alloys have been widely known to be pivotal for the long term survival of metal structures in watery environments thanks to their poisonous effect on limpets, clams and mussels that would otherwise cause corrosion of the structures they grow on or stick to. Silver and silver based materials and cadmium and cadmium based metals are also known bactericides but the first are costly and the seconds are toxic.

On the hand, over the years the amount of time people live and work in closed environments with air conditioning and oxygenation conveyed through air pumping solutions and air recycling solutions, which may be subject to contamination by virus and bacterial diseases, has increased. A similar consideration applies to the increase in world's population, which is leading to progressively higher population densities in cities and continuously larger urban areas creating environments which are every day more exposed to development and rapid spread of air-borne viral and bacterial diseases.

Air filtering solutions for personal protection devices, typically used in work environments where the presence of powders is inevitable or in hospitals and sanitary facilities where air-borne diseases have a higher likelihood of occurrence, are based on polymers or natural fiber materials. These solutions are cheap, easy to manufacture in large numbers and efficient in the filtering capacity although not easy to recycle. Metal materials for these applications inevitably come at a higher cost, so they are essentially limited to applications where polymers and natural fibers typically either fail or would be outside of the respective operational limit, that is high temperature environments and/or corrosive environments (i.e. internal combustion engines, chemical reactors or industrial furnaces).

However, when production volumes (and the industrial capacity overall) are unable to match the demand for polymer and natural fiber based filters, such as - for instance - in the event of a huge rise in request and/or a sudden spike in request due to a pandemic caused by air-borne diseases (such as COVID-19), metal based filters may be a reliable solution in that they are reusable (hence resulting in a compensation of the higher manufacturing costs) and effective in reducing waste.

Metal powder based and metal fiber filters are known in literature and are typically, but not solely, manufactured through powder metallurgy starting from spherical powders of different sizes and geometries or from long metal fibers. Metal filters are also manufactured through thin metal membranes (see for example CN106731412A) for the filtration of very thin particles. However, as of today there are no known metal filters that comply to international standards for personal protection devices such as UNI EN 140:2000, UNI EN 143:2007 and UNI EN 149:2009. In addition to this, no metal filters are available that can be used also as anti-viral or anti-bacterial devices.

### Object of the invention

The object of the present invention is to solve the technical problems of the above prior art. Specifically, the object of the invention is to provide a high efficiency air filtering material with a low pressure drop and with anti-viral anti-bacterial properties.

### Summary of the invention

The object of the invention is achieved by a method according to the features of the appended claims, which form an integral part of the technical disclosure herein provided in relation to the invention.

### Brief description of the figures

The invention will now be described with reference to the attached figures, provided purely by way of non limiting examples, and wherein:
- Figure 1 to 4 are representative of steps in a first embodiment of the method according to the invention,
- Figures 5 to 8 are representative of steps in a second embodiment of the method according to the invention.

### Detailed description

By way of general premise, provided in the following is a list of certain definition that are useful for the understanding of the embodiments herein.

Fibers: strands, long at will, of material made in polymeric, natural, ceramic or metallic materials.

Aspect ratio (s): the ratio between the ratio between a fiber length 1 and a dimension transverse to the fiber length, d (s = 1/d), the dimension transverse to the fiber length being, e.g., a diameter (in case of circular cross-section fibers), a side or a diagonal in case of polygonal cross sections, or the diameter of the inscribed or circumscribed circles in the event of irregular cross sections.

Short fibers: objects with an aspect ratio between 10 and 10000, typically but not solely made by the processes of cutting, breaking or chipping of fibers; in many metals they can also be produced through properly executed machining operations

Metal matrix composite: a composite material whose structural properties are primarily determined by a metal scaffold or skeleton.

Volume fraction: the fraction in volume of a composite phase, according the rule of mixtures.

Filter materials according to embodiments herein that are not covered by the claims are metal matrix composite materials comprising at least one metal phase in the form of short fibers (s = l/d comprised between 10 and 10000, preferably between 550 and 10000. Such at least one metal phase has a fiber length (1) comprised between 1 um and 10 mm (endpoints included) and a diameter (d) or thickness, or in general the dimension transverse to the fiber length, comprised between 0.1 um and 300 um (endpoints included). The cross section can be round, square, rectangular or irregular but preferentially should be irregular, rectangular or square to enhance filtering capacity.

Preferably, the filter material has an average porosity comprised between 45% to 85% in volume. Again preferably, the total fiber content of the filter material is comprised between 10% to 60% in volume.

In the method according to the invention, the metal fibers of the at least one metallic phase are selected among the following:
(a) metal alloys comprising 50% in weight or more of copper; generally, the higher the copper amount, the better.
(b) a stainless steel (such as an austenitic grade AISI 316).

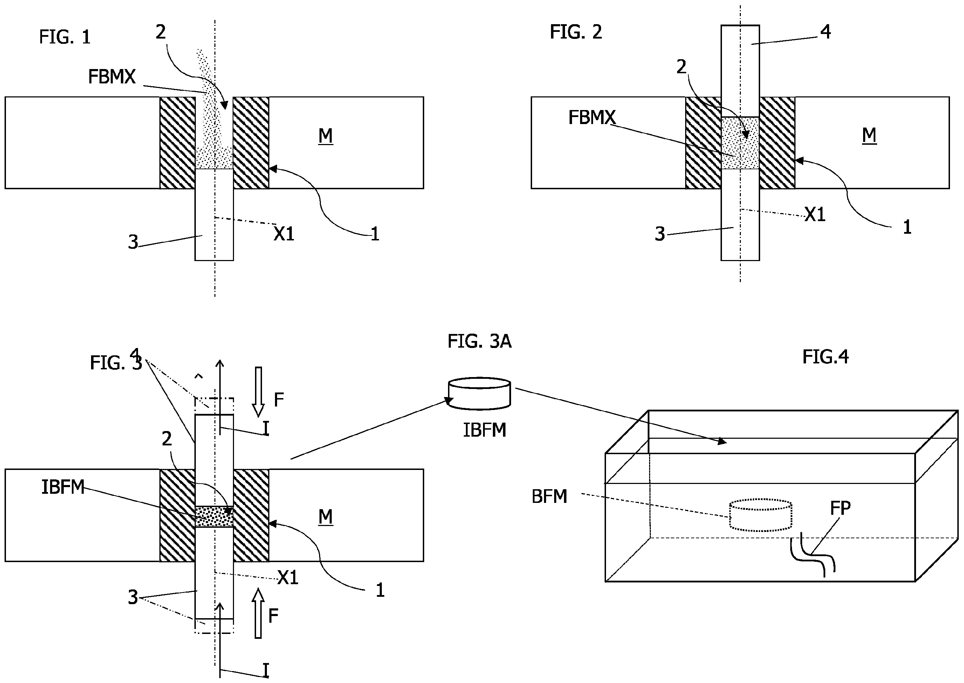

With reference to figures 1 to 4, the method of manufacturing the filter material involves sintering according to the invention.

The method according to the invention for manufacturing such a filter material comprises:
- providing at least one metallic phase in the form of fibers having an aspect ratio, defined as the ratio between a fiber length and a dimension transverse to the fiber length, comprised between 10 and 10000, preferably between 550 and 10000,
- providing at least one filler phase in powder form,
- mixing the at least one metallic phase and the at least one filler phase to obtain a mixture FBMX of the at least one metallic phase and the at least one filler phase,
- placing the mixture of the at least one metallic phase and the at least one filler phase into a forming die,
- bonding the mixture of the at least one metallic phase and the at least one filler phase in the forming die into an intermediate bonded filter material,
- removing the at least one filler phase from the intermediate bonded filter material, thereby obtaining a bonded filter material according to the invention.

The at least one metal phase has a fiber length (1) comprised between 1 um and 10 mm (endpoints included) and a diameter (d) or thickness, or in general the dimension transverse to the fiber length, comprised between 0.1 um and 300 um (endpoints included) .

According to the invention, bonding of the mixture is provided through sintering.

The manufacturing method according to the invention envisages the application of pressure and voltage through a mixture FBMX of at least one metallic phase in the form of short fibers and at least one filler phase in powdered form, the mixture being placed in a forming die 1.

The method comprises:
- providing the at least one metallic phase in the form of fibers having an aspect ratio comprised between 10 and 10000, preferably between 550 and 10000; the at least one metal phase has a fiber length (1) comprised between 1 um and 10 mm (endpoints included) and a dimension (d) transverse to the fiber length, comprised between 0.1 um and 300 um (endpoints included),
- providing at least one filler phase in powder form,
- mixing the at least one metallic phase and the at least one filler phase to obtain a mixture FBMX of the at least one metallic phase and the at least one filler phase; preferably, mixing is carried out by means of a Turbula-type mixer, or a ball mill of any kind such as an attritor mill or a planetary ball mill,
- placing the mixture FBMX of the at least one metallic phase and the at least one filler phase into the forming die 1, particularly in a forming cavity 2 thereof (figures 1, 2),
- applying to the mixture FBMX of the at least one metallic phase and the at least one filler phase into the forming die 1 a pressure from 5 MPa to 350 MPa, and a voltage of 1 V to 150V for a time interval up to 500 ms, preferably from 1 ms to 300 ms, and an even more preferably from 1 ms to 100 ms, to form the mixture into an intermediate bonded filter material with defined shape (figure 3), and
- removing the at least one filler phase from the green filtering material, thereby obtaining the filter material, wherein the total fiber content in of the filter material is comprised between 10% to 60% in volume thereof (figure 4).

A bonded filter material obtained by the method disclosed above has an average porosity comprised between 45% to 85% in volume of the bonded filtered material.

In a preferred embodiment, the intermediate bonded (sintered) filter material is formed into a desired shape by means of electro sinter forging, a sintering method disclosed in European Patent no. EP 2 198 993 B1 in the name of the same Applicant. This sintering method is also known, and referred to accordingly in the following, as electro-sinter-forging.

The forming cavity 2 of the forming die 1 is, accordingly, delimited by the inner walls of the forming die 1 and a pair of sintering electrodes 3, 4 movable into and out of the cavity along an axis X1. The forming die 1 is received in a forming machine globally designated by reference M. Pressure is therefore applied to the mixture FBMX into the forming die by means of the sintering electrodes 3, 4, and so is voltage, which is applied across the sintering electrodes 3, 4 themselves. The combination of pressure and voltage applied across the electrodes 3, 4 sinter the mixture FBMX into the desired shape.

Accordingly, a nominal pressure between 5 to 350 MPa is applied on the electrodes 3, 4 (calculated as the force applied on the cross section of the plunger perpendicular to the current flow), and a voltage is applied at the same electrodes between 1 to 150 V for a time interval up to 500 ms in order to develop, on the system comprising electrodes 3, 4 and mixture FBMX a specific energy input (SEI) (defined as the integral in time of the product of the real part of the voltage and real part of the current, normalized by the weight of all the phases introduced) between 0.1 and 3 kJ/g.

As the voltage increases from 0 V to the desired value, the electrodes 3, 4 follow up and/or push on the mixture FBMX while the current flow therethrough, thereby consolidating the mixture to an intermediate bonded (sintered) filter material IBFM. At the end of the discharge, the part is ejected from the die 1 (figure 3A) and the cycle restarts again with the insertion of new powders.

As disclosed above, the at least one metallic comprises metal (short) fibers selected among the following:
(a) metal alloys comprising 50% in weight or more of copper; generally, the higher the copper amount, the better.
(b) a stainless steel (such as an austenitic grade AISI 316).

The filler phase(s), according to the invention, is a dissolvable phase, preferably a water soluble phase. This is intended to designate a phase which can be eliminated from the final filter material through additional processing, for instance through the application of heat and/or pressure, and/or solvents and/or mechanical actions. According to the invention, the filler phase is selected from among the following: NaCl (sodium chloride), KCl (potassium chloride), KI (potassium iodide), K₂CrO₄ (potassium chromate), KNO₂ (potassium nitrite), MgCl₂ (magnesium chloride) and Na₂SO₄ (sodium sulfate) .

According to the invention, the intermediate bonded filter material IBFM ejected from the die 1 is then subject to removal of the filler phase (Figure 4). To this end, the intermediate bonded (sintered) filter material is inserted into a water filled container CT, preferably with moving water and preferably with ultrasound vibrations to evacuate the filler phase FP and to clean the composite from the filler phase FP, thereby opening the structure to create an open pore material.

Preferably, after the complete evacuation or leaching of the filler phase FP, the filter material may be placed to dry in air or is placed in an oven, preferably under vacuum or with forced air movements, in order to remove the water and any residual filler phase or residual non-sintered metal particles.

In other words, the filler phase(s) FP according to the invention essentially works as a sacrificial bonding (sintering, in this embodiment) core that is intended to provide the desired porosity pattern through the mixture FBMX, only to be dissolved when the mixture is consolidated through sintering. During sintering, the at least one loose metallic phase seals around the filler phase(s) into the intermediate bonded filter material, which is then subject to removal of the filler phase(s) to create pores at the filler phase(s) sites.

In another embodiment not covered by the claims, the bonded filter material is manufactured through the use of gluing agents, either they be as bicomponent or thermosetting polymeric compounds.

Instead of resorting to sintering for bonding the mixture FBMX, the bonding agent comprises one or more polymeric compounds which are mixed with the at least one metallic phase and the at least one filler phase (both being the same as the embodiment disclosed above, wherein bonding is achieved through sintering) to provide the mixture FBMX. The polymeric compound is preferably provided in liquid form, with viscosity depending on the processing conditions and material specifications.

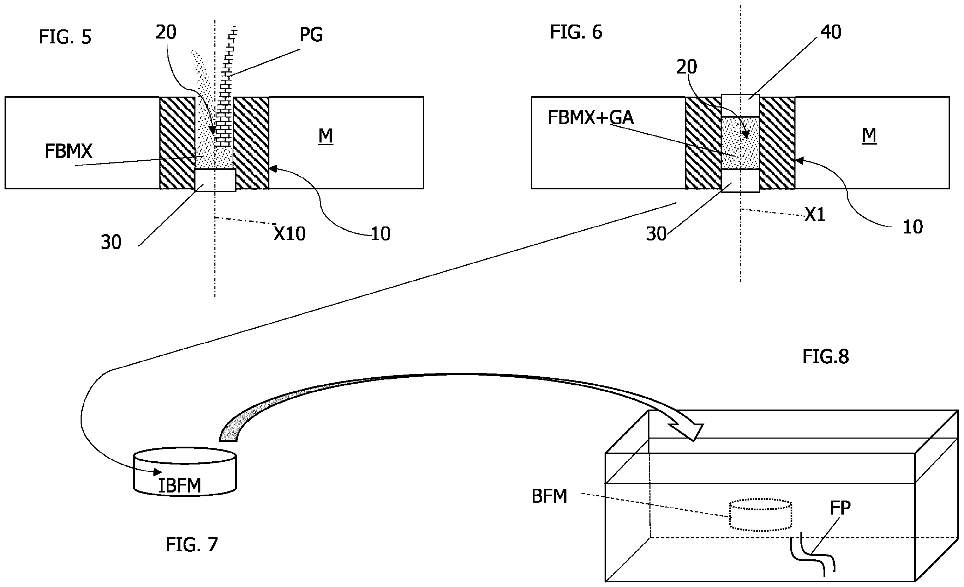

Accordingly, and in detail, in these embodiments the method comprises:
- providing the at least one metallic phase in the form of fibers having an aspect ratio, defined as the ratio between a fiber length and a dimension transverse to the fiber length, comprised between 10 and 10000; preferably, the at least one metal phase has a length (1) comprised between 1 um and 10 mm (endpoints included) and a dimension (d) transverse to the fiber length, comprised between 0.1 um and 300 um (endpoints included),
- providing the at least one filler phase in powder form,
- mixing the at least one metallic phase and the at least one filler phase to obtain a mixture FBMX of the at least one metallic phase and the at least one filler phase,
- placing the mixture of the at least one metallic phase and the at least one filler phase into a forming die 10 (particularly into a forming cavity 20 thereof, figure 5), and adding a binder comprising a polymer or polymer-based binder PG (such as, for instance but not exclusively, a polymer or polymer-based gluing agent),
- bonding the mixture of the at least one metallic phase and the at least one filler phase in the forming die into an intermediate bonded filter material IBFM, the bonding being provided by polymerizing the binder PG (figures 6, 7), and
- removing the at least one filler phase PF from the intermediate bonded filter material (Figure 8).

In further detail, the mixture FBMX is placed in the forming die 10 preferably already incorporating the binder PG (i.e. pre mixed), for instance by injection, and either left to polymerize (at room temperature and/or with no additional conditioning) and form the cross links needed to provide structural integrity, or thermoset according to a predetermined curing thermal cycle of the polymer involved (for instance through a curing oven).

The die 10 can be of any known type, for example - as shown herein - it may comprises a forming cavity 2 delimited at opposite ends by a punch 40 and a die 30, but punch and die designs may vary to the extent they define themselves the forming cavity 20.

In this embodiment, accordingly, the intermediate bonded filter material IBFM comprises the at least one metallic phase, the at least one filler phase, and the binder PG.

Once the intermediate bonded filter material is ejected from the die 10 (figure 7), the same is then subject to removal of the filler phase similarly to the sintered embodiments.

To this end, with reference to figure 7, the intermediate bonded filter material IBFM is inserted into a water filled container CT, preferably with moving water and preferably with ultra-sound vibrations to evacuate the filler phase FP and to clean the composite from the filler phase FP, thereby opening the structure to create and open pore material.

Preferably, after the complete evacuation or leaching of the filler phase FP, the filter material may be placed to dry in air or is placed in an oven, preferably under vacuum or with forced air movements, in order to remove the water and any residual filler phase material or residual non-bonded metal particles.

This embodiment of the method results in generally weaker materials, with lower mechanical properties and lower filtering properties over time as the filters are cleaned in autoclave or subject to thermal cycles through their service life. Nevertheless this second embodiment of the method allows to manufacture a similar material in shape, as well as form and amount of pores required to obtain a low breathing resistance and a high filtering capacity.

Provided below is an overview of exemplary methods of manufacturing filter materials representative of embodiments of the invention. The examples below also provide an overview of exemplary embodiments of the manufacturing method herein.

### Example 1

Metallic phase: Bronze short fibers with 96% of Copper and 4% of Sn (96/4) with the following screen analysis: >1 mm: 0,8%; >0,5 mm: 12,6%; >0,25 mm 20,6% and >0,125 mm 22,6% in weight with a residue on the pan of 0%

The bronze material has a theoretical density of 8,9 g/cc.
Filler phase: NaCl
Mixing: Turbula-type mixing for 20 minutes

Processing agents: Polyethylene glycol (PEG), 1,17% in volume / 0,3% in weight. Processing agents can be added to the mixture FBMX to enhance mixing and achieve an overall homogeneous mixture of metallic phase(s) and filler phase(s) - and optionally binder - where provided for.

Procedure: after weighting and mixing of the powders they are inserted in a diameter 24 mm die 1 and electro-sinter-forged to theoretical density (4,37 g/cc) at a height of 2.5 mm with the following processing parameters: Specific Energy Input SEI=0,95 kJ/g, maximum voltage Vmax = 7,767 V, Maximum current density Imax = 74,5 kA, pressure P = 150 MPa

Filtering properties: Pressure drop 3,34 ± 0,5 mbar with an air flow of 20 l/min on a cross section of 369 mm² and a filtration capacity (maximum penetration with NaCl) of at least 16,9% according to UNI EN 140.

### Example 2

Metal phase: Bronze short fibers with 96% of Copper and 4% of Sn (96/4) with the following screen analysis: >1 mm: 0,8%; >0,5 mm: 12,6%; >0,25 mm 20,6% and >0,125 mm 22,6% in weight with a residue on the pan of 0%

The bronze material has a theoretical density of 8,9 g/cc.
Filler phase: NaCl
Mixing: Turbula-type mixing for 20 minutes
Processing agents: Polyethylene glycol (PEG),

Procedure: after weighing and mixing of the powders they are inserted in a diameter 24 mm die 1 and electro-sinter-forged to theoretical density (4,17 g/cc) at a height of 2.5 mm with the following processing parameters:
Filtering properties: Pressure drop of 4,5±0,45 with an air flow of 20 l/min on a cross section of 369 mmand a filtration capacity (maximum penetration with NaCl) of at least 19,6% according to UNI EN 140.

### Example 3

Metallic phase: Brass short fibers with 67% of Copper and 33% of Zinc The brass material has a theoretical density of 8,5 g/cc.
Mixing: Turbula-type mixing for 20 minutes

Processing agents: Polyethylene glycol (PEG), 1,17% in volume / 0,3% in weight.

Procedure: after weighting and mixing of the powders they are inserted in a diameter 24 mm die 1 and electro-sinter-forged to theoretical density (4,33 g/cc) at a height of 2.5 mm with the following processing parameters: SEI = 0,967 kJ/g, Vmax = 7,69 V, Imax = 83 kA, P = 140 MPa.

Filtering properties: Pressure drop of 2,9±0,6 with an air flux of 20 l/min on a cross section of 369 mm² and a filtration capacity (maximum penetration with NaCl) of at least 20% according to UNI EN 140.

Filter materials obtained by the method according to embodiments herein are readily applicable to a wide range of human applications, for instance breathing and protective face masks (such as FFP2, FFP3 masks to be used, i.a., in the event of pandemics such as the recent COVID-19 outbreak), air conditioning systems, air circulation systems, vehicles, etc.

The filter materials manufactured with the preferred method according to the invention are virtually infinitely reusable, as they can be sterilized with no impact on structural integrity thereof (being metal-based materials, they are immune to structural failure at temperatures from 100°C to 150°C), and they can be themselves anti-viral or anti-bacterial devices when made with copper or copper-based and silver or silver-based short fibers as the metallic phase.

Filters manufactured according to the invention have the advantage of being easily manufactured for a very fine grade of filtration (as high as 99.9%), of having a high rigidity, and a very low pressure drop which allows them to be readily used also for personal protection devices.

## Claims

1. A method of manufacturing a bonded filter material, the method comprising:
- providing at least one metallic phase in the form of fibers having an aspect ratio, defined as the ratio between a fiber length and a dimension transverse to the fiber length, comprised between 1 and 10000, wherein the at least one metallic phase is selected among the following:
(a) metal alloys comprising 50% in weight or more of copper;
(b) a stainless steel.
(c) metal alloys comprising 50% in weight or more of silver, and wherein the at least one metallic phase has a fiber length (1) comprised between 1 µm and 10 mm and a dimension (d) transverse to the fiber length, comprised between 0.1 µm and 300 pm,
- providing at least one filler phase (FP) in powder form, wherein the at least one filler phase is selected from among the following: NaCl sodium chloride, KCl potassium chloride, KI potassium iodide, K2Cr04 potassium chromate, KN02 potassium nitrite, MgCl₂ magnesium chloride and Na2S04 sodium sulfate,
- mixing the at least one metallic phase and the at least one filler phase (FP) to obtain a mixture FBMX of the at least one metallic phase and the at least one filler phase (FP),
- placing the mixture (FBMX) of the at least one metallic phase and the at least one filler phase into a forming die (1),
- bonding the mixture (FBMX) of the at least one metallic phase and the at least one filler phase in the forming die (1) into an intermediate bonded filter material (IBFM),
- removing the at least one filler phase (FP) from the intermediate bonded filter material (IBFM), thereby obtaining a bonded filter material (BFM),
wherein said bonding the mixture (FBMX) of the at least one metallic phase and the at least one filler phase comprises applying to the mixture (FBMX) of the at least one metallic phase and the at least one filler phase into the forming die (1) a pressure from 5 MPa to 350 MPa, and a voltage of 1 V to 150V for a time interval up to 500 ms, preferably from 1 ms to 300 ms, and an even more preferably from 1 ms to 100 ms.

2. The method of any of Claim 1, wherein removing the at least one filler phase comprising dissolving the filler phase (FP) by water and optionally ultrasound vibrations.

3. The method of any of claims 1 or 2, wherein the dimension transverse to the fiber length is a fiber diameter.

4. The method of any of claims 1 to 3, wherein the dimension transverse to the fiber length is a fiber thickness.

## Patentansprüche

1. Verfahren zur Herstellung eines gebundenen Filtermaterials, wobei das Verfahren umfasst:
- Bereitstellen mindestens einer metallischen Phase in der Form von Fasern mit einem als das Verhältnis zwischen einer Faserlänge und einer quer zu der Faserlänge verlaufenden Abmessung definierten Seitenverhältnis zwischen 1 und 10000, wobei die mindestens eine metallische Phase aus Folgendem ausgewählt ist:
(a) Metalllegierungen, umfassend 50 Gewichtsprozent oder mehr Kupfer;
(b) einem rostfreien Stahl;
(c) Metalllegierungen, umfassend 50 Gewichtsprozent oder mehr Silber, und wobei die mindestens eine metallische Phase eine Faserlänge (1) zwischen 1 µm und 10 mm und eine quer zu der Faserlänge verlaufende Abmessung (d) zwischen 0,1 µm und 300 µm aufweist,
- Bereitstellen mindestens einer Füllstoff-Phase (FP) in Pulverform, wobei die mindestens eine Füllstoff-Phase aus Folgendem ausgewählt ist: NaCl Natriumchlorid, KCl Kaliumchlorid, KI Kaliumiodid, K₂CrO₄ Kaliumchromat, KNO₂ Kaliumnitrit, MgCl₂ Magnesiumchlorid und Na₂SO₄ Natriumsulfat,
- Mischen der mindestens einen metallischen Phase und der mindestens einen Füllstoff-Phase (FP), um ein Gemisch FBMX aus der mindestens einen metallischen Phase und der mindestens einen Füllstoff-Phase (FP) zu erhalten,
- Platzieren des Gemischs (FBMX) aus der mindestens einen metallischen Phase und der mindestens einen Füllstoff-Phase in einem Formwerkzeug (1),
- Verbinden des Gemischs (FBMX) aus der mindestens einen metallischen Phase und der mindestens einen Füllstoff-Phase in dem Formwerkzeug (1) zu einem intermediären gebundenem Filtermaterial (IBFM),
- Entfernen der mindestens einen Füllstoff-Phase (FP) aus dem intermediären gebundenen Filtermaterial (IBFM), wodurch ein gebundenes Filtermaterial (BFM) erhalten wird,
wobei das Verbinden des Gemischs (FBMX) aus der mindestens einen metallischen Phase und der mindestens einen Füllstoff-Phase das Beaufschlagen des Gemischs (FBMX) aus der mindestens einen metallischen Phase und der mindestens einen Füllstoff-Phase in dem Formwerkzeug (1) mit einem Druck von 5 MPa bis 350 MPa und einer Spannung von 1 V bis 150V für ein Zeitintervall bis zu 500 ms, vorzugsweise von 1 ms bis 300 ms, und sogar noch bevorzugter von 1 ms bis 100 ms, umfasst.

2. Verfahren nach Anspruch 1, wobei
das Entfernen der mindestens einen Füllstoff-Phase das Auflösen der Füllstoff-Phase (FP) durch Wasser und wahlweise Ultraschallschwingungen umfasst.

3. Verfahren nach einem der Ansprüche 1 oder 2, wobei die quer zu der Faserlänge verlaufende Abmessung ein Faserdurchmesser ist.

4. Verfahren nach einem der Ansprüche 1 bis 3, wobei die quer zu der Faserlänge verlaufende Abmessung eine Faserdicke ist.

## Revendications

1. Procédé de fabrication d'un matériau filtrant collé, le procédé comprenant :
- la fourniture d'au moins une phase métallique sous la forme de fibres ayant un rapport de forme, défini comme le rapport entre une longueur de fibre et une dimension transversale à la longueur de fibre, compris entre 1 et 10000, où l'au moins une phase métallique est choisie parmi ce qui suit :
(a) des alliages métalliques comprenant 50% en poids ou plus de cuivre ;
(b) un acier inoxydable.
(c) des alliages métalliques comprenant 50% en poids ou plus d'argent, et où l'au moins une phase métallique a une longueur de fibre (1) comprise entre 1 µm et 10 µm et une dimension (d) transversale à la longueur de fibre, comprise entre 0,1 µm et 300 µm,
- la fourniture d'au moins une phase de charge (FP) sous forme de poudre, où l'au moins une phase de charge est choisie parmi ce qui suit : le chlorure de sodium NaCl, le chlorure de potassium KCI, l'iodure de potassium KI, le chromate de potassium K2CrO4, le nitrite de potassium KNO2, le chlorure de magnésium MgCl2 et le sulfate de sodium Na2SO4,
- le mélange de l'au moins une phase métallique et de l'au moins une phase de charge (FP) pour obtenir un mélange FBMX de l'au moins une phase métallique et de l'au moins une phase de charge (FP),
- le placement du mélange (FBMX) de l'au moins une phase métallique et de l'au moins une phase de charge dans une matrice de formage (1),
- le collage du mélange (FBMX) de l'au moins une phase métallique et de l'au moins une phase de charge dans la matrice de formage (1) pour obtenir un matériau filtrant collé intermédiaire (IBFM),
- le retrait de l'au moins une phase de charge (FP) du matériau filtrant collé intermédiaire (IBFM), obtenant ainsi un matériau filtrant collé (BFM),
dans lequel ledit collage du mélange (FBMX) de l'au moins une phase métallique et de l'au moins une phase de charge comprend l'application au mélange (FBMX) de l'au moins une phase métallique et de l'au moins une phase de charge dans la matrice de formage (1) d'une pression de 5 MPa à 350 MPa, et d'une tension de 1 V à 150 V pendant un intervalle de temps allant jusqu'à 500 ms, de préférence de 1 ms à 300 ms, et encore plus préférablement de 1 ms à 100 ms.

2. Procédé de la revendication 1, dans lequel le retrait de l'au moins une phase de charge comprenant la dissolution de la phase de charge (FP) par de l'eau et éventuellement des vibrations ultrasonores.

3. Procédé de l'une des revendications 1 ou 2, dans lequel la dimension transversale à la longueur de fibre est un diamètre de fibre.

4. Procédé de l'une des revendications 1 à 3, dans lequel la dimension transversale à la longueur de fibre est une épaisseur de fibre.
